# EUROPEAN PATENT SPECIFICATION

(11) **EP 3 808 136 B1**
(45) Date of publication and mention of the grant of the patent: **29.06.2022**
(21) Application number: 19756292.9
(22) Date of filing: 07.08.2019
(51) Int. Cl.: H04W 52/02

(54) **DETERMINING A RESOURCE CONTROL STATE BASED ON A POWER STATUS**
BESTIMMUNG EINES RESSOURCENSTEUERUNGSSTATUS AUF BASIS EINES LEISTUNGSSTATUS
DÉTERMINATION D'UN ÉTAT DE COMMANDE DE RESSOURCE SUR LA BASE D'UN ÉTAT DE PUISSANCE

(30) Priority: 07.08.2018 US 201862715502 P
(43) Date of publication of application: 21.04.2021
(73) Proprietor: Google LLC, Mountain View, CA 94043 (US)
(72) Inventor: CHEN, Teming, Mountain View, California 94043 (US)
(74) Representative: Cupitt, Philip Leslie
(86) International application number: PCT/US2019/045482
(87) International publication number: WO 2020/033531

(56) References cited:
- US-A1- 2018 092 157
- SAMSUNG: "UE Assistance Information for energy efficiency enhancement", 3GPP DRAFT; R2-1810483 UE ASSISTANCE INFORMATION FOR ENERGY EFFICIENCY ENHANCEMENT, 3RD GENERATION PARTNERSHIP PROJECT (3GPP), MOBILE COMPETENCE CENTRE ; 650, ROUTE DES LUCIOLES ; F-06921 SOPHIA-ANTIP , vol. RAN WG2, no. Montreal, Canada; 20180702 - 20180706 1 July 2018 (2018-07-01), XP051467644, Retrieved from the Internet: URL:http://www.3gpp.org/ftp/Meetings%5F3GP P%5FSYNC/RAN2/Docs [retrieved on 2018-07-01]
- ITRI: "RRC State Transition between Connected and Inactive", 3GPP DRAFT; R2-1701343 RRC STATE TRANSITION BETWEEN CONNECTED AND INACTIVE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG2, no. Athens, Greece; 20170213 - 20170217 12 February 2017 (2017-02-12), XP051212007, Retrieved from the Internet: URL:http://www.3gpp.org/ftp/Meetings_3GPP_ SYNC/RAN2/Docs/ [retrieved on 2017-02-12]

## Description

### BACKGROUND

The evolution of wireless communication to Fifth-Generation (5G) standards and technologies provide higher data rates and greater capacity, with improved reliability and lower latency, which enhances mobile broadband services. 5G technologies also provide new classes of services for vehicular, fixed wireless broadband, and the Internet of Things (IoT). The specification of the features in the 5G air interface is defined as 5G New Radio (5G NR).

Some user equipments (UEs) are mobile devices that have a limited amount of battery capacity. Without power conservation techniques, the UE may quickly drain its battery performing wireless communications, including 5G wireless communications. As a result, the user may have to charge the UE frequently.

3GPP R2-1810483 ("UE Assistance Information for energy efficiency enhancement") relates to the use of UE Assistance Information to inform a network of the UE's power saving preference. The UE Assistance Information can initiate RRC state transition triggered by the UE. A UE can report a UE residual battery status which can be decided based on whether remaining battery level is higher or lower than a pre-defined threshold. R2-1810483 does not disclose, at least, that responsive to determining that the power status of the UE does not support an inactive state, the UE transmits a response message to a base station to cause the base station to transmit a second request message comprising other instructions to transition to an idle state, or that, responsive to receiving the second request message, the UE transitions from a connected state to the idle state.

### SUMMARY

According to the invention there is provided a method as defined in claim 1 and a user equipment as defined in claim 12.

Techniques and apparatuses are described that determine a resource control state based on a power status. In particular, a resource control module of a user equipment (UE) selects a particular disconnected resource control state for a wireless transceiver based on a power status of the UE. As an example, a set of disconnected resource control states in a fifth-generation (5G) standard may include both an inactive state and an idle state in a fifth-generation (5G) standard. The power status represents an available amount of power (e.g., an amount of charge remaining in a battery or a connection to an external power source) or a current power mode of a UE (e.g., a normal power mode or a power-saving mode). If the power status is sufficient to support the inactive state, the resource control module transitions to the inactive state to enable a connection with a base station to be quickly resumed. Alternatively, if the power status is insufficient for the inactive state, the resource control module operates in the idle state to conserve power. In some cases, the resource control module directs the wireless transceiver to dynamically switch between different disconnected resource control states responsive to changes in the power status. By determining the resource control state based on the power status, the resource control module balances communication responsiveness and power consumption of the UE to support mobile operation.

### BRIEF DESCRIPTION OF THE DRAWINGS

Apparatuses of and techniques for determining a resource control state based on a power status are described with reference to the following drawings. The same numbers are used throughout the drawings to reference like features and components:
FIG. 1 illustrates an example environment in which determining a resource control state based on a power status can be implemented.
FIG. 2 illustrates another example environment in which a user equipment may operate according to a resource control state.
FIG. 3 illustrates an example user equipment for determining a resource control state based on a power status.
FIG. 4 illustrates example characteristics that may be used to identify a power status of a user equipment for determining a resource control state.
FIG. 5 illustrates an example state diagram for determining a resource control state based on a power status.
FIG. 6 illustrates an example method for determining a resource control state based on a power status.

### DETAILED DESCRIPTION

### Overview

This document describes techniques and devices that determine a resource control state based on a power status. In some situations, a user equipment (UE) has a limited amount of power available to perform wireless communications. If the UE is connected to a base station (e.g., a cell) that supports Fifth-Generation (5G) protocols, the UE can receive a request from a network to transition to a particular resource control state, such as an inactive state or an idle state. Within these states, the UE respectively suspends or releases a connection to the base station, which enables the UE to conserve power. While the idle state enables the UE to consume less power relative to the inactive state, the inactive state enables the UE to reconnect to the base station with a smaller delay relative to the idle state. Thus, there is a tradeoff between power consumption and responsiveness. Without knowledge of a power status of the UE, however, the UE may operate in a suboptimal resource control state, which may cause the UE to deplete available power resources faster or experience an increased delay in responsiveness.

The techniques and devices described enable determination of a resource control state based on a power status. In particular, a resource control module of a UE selects a particular disconnected resource control state for a wireless transceiver based on a power state of the UE. As an example, a set of disconnected resource control states in a Fifth-Generation (5G) standard may include both an inactive state and an idle state. The power status can represent an available amount of power (e.g., an amount of charge remaining in a battery or a connection to an external power source) or a current power mode of a UE (e.g., a normal power mode or a power-saving mode). If the power status is sufficient to support the inactive state, the resource control module transitions to the inactive state to enable a connection with a base station to be quickly resumed. Alternatively, if the power status is insufficient for the inactive state, the resource control module operates in the idle state to conserve power. In some cases, the resource control module directs the wireless transceiver to dynamically switch between different disconnected resource control states responsive to changes in the power status. By determining the resource control state based on the power status, the resource control module balances communication responsiveness and power consumption of the UE to support mobile operation.

### Example Environment

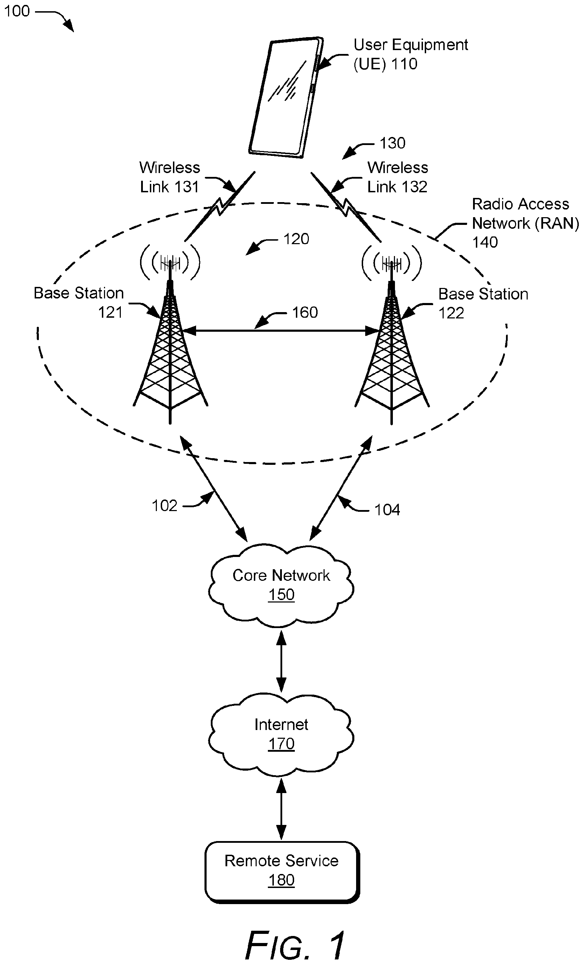

FIG. 1 is an illustration of an example environment 100 for which determining a resource control state based on a power status may be embodied. In the example environment 100, a UE 110 (e.g., a user device) communicates with one or more base stations 120 (illustrated as base stations 121 and 122) through one or more wireless communication links 130 (wireless link 130), illustrated as wireless links 131 and 132. Although illustrated as a smart phone, the UE 110 may be implemented as any suitable computing or electronic device, such as a mobile communication device, a modem, a cellular phone, a gaming device, a navigation device, a media device, a laptop, a tablet, a smart appliance, an Advanced Driver Assistance System (ADAS), a point-of-sale (POS) transaction system, a drone, a camera, a wearable smart-device, a personal media device, and the like. The base station 120 (e.g., a next generation gNodeB (gNB) or a next generation evolved NodeB (ng-eNB) connected with a Fifth-Generation core network (5GC)) can be implemented in a macrocell, microcell, small cell, picocell, and the like, or any combination thereof.

The base stations 121 and 122 communicate with the UE 110 using the wireless links 131 and 132, which are implemented as any suitable type of wireless link. The wireless links 131 and 132 can include a downlink of data or control information communicated from the base stations 120 to the UE 110, an uplink of other data or control information communicated from the UE 110 to the base stations 120, or both. The wireless links 130 include one or more wireless links or bearers implemented using any suitable communication protocol or standard, or combination of communication protocols or standards such as an Enhanced Long-Term Evolution (eLTE) standard or a Fifth-Generation New Radio (5G NR) standard. Multiple wireless links 130 can be aggregated in a carrier aggregation to provide a higher data rate for the UE 110. Multiple wireless links 130 from multiple base stations 120 can be configured for Coordinated Multipoint (CoMP) communication with the UE 110.

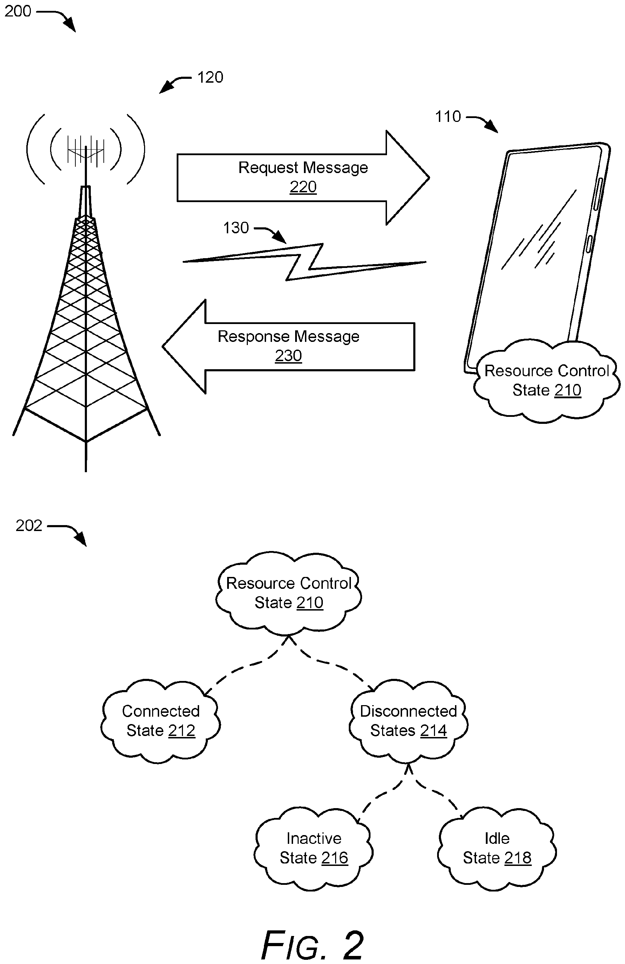

The base stations 120 are collectively a Radio Access Network (RAN) 140, such as an Evolved Universal Terrestrial Radio Access Network (E-UTRAN). The base stations 121 and 122 connect to a core network 150 (e.g., a 5GC), at 102 and 104 respectively, to form a wireless operator network (wireless access network). The base stations 121 and 122 communicate using a protocol, at 160, to exchange user-plane and control-plane data. The UE 110 connects, through the core network 150, to public networks, such as the Internet 170 to interact with a remote service 180. The UE 110 operates according to a resource control state, as further described in FIG. 2.

FIG. 2 illustrates another example environment 200 in which the UE 110 operates according to a resource control state 210. At 202, example resource control states 210 supported by the standard are shown to include at least one connected state 212 (e.g., an active state) and at least two disconnected states 214, such as an inactive state 216 and an idle state 218 in the 5GNR standard. Each of these resource control states 210 have different quantities or types of resources available, which may affect power consumption within the UE 110. Generally, the UE 110 establishes a connection with the base station 120 or is actively connected to the base station 120 in the connected state 212. In the inactive state 216, the UE 110 suspends the connection with the base station 120 and retains information that enables the connection with the base station 120 to be re-established quickly. The UE 110 releases the connection with the base station 120 in the idle state 218. Different situations can cause the UE 110 to transition among the different resource control states 210.

In the environment 200, consider that the UE 110 is in the connected state 212 and established a connection with the base station 120 using the wireless link 130 of FIG. 1, such as a 5G NR link. In the depicted environment 200, the base station 120 transmits a request message 220 to the UE 110, which includes instructions for the UE 110 to transition from the connected state 212 to the inactive state 216. The request message 220 can be, for example, a radio-resource-control (RRC) connection-release message. The base station 120 sets an indicator (e.g., a suspend indicator) within the request message 220 or includes information regarding an inactive state configuration within the request message 220 to direct the UE 110 to transition to the inactive state 216.

Instead of directly transitioning to the inactive state 216, however, the UE 110 evaluates its current power status. If the power status supports the inactive state 216, the UE 110 transitions from the connected state 212 to the inactive state 216 per the request message 220. However, if the power status supports the idle state 218 (e.g., does not support the inactive state 216), the UE 110 transitions from the connected state 212 to the idle state 218.

In some cases, the UE 110 transmits a response message 230 to inform the base station 120 of the decision to operate in the idle state 218 instead of the inactive state 216. The response message 230 can include an RRC connection-resume-request message, which can trigger the base station 120 to transmit another request message 220 that directs the UE 110 to transition to the idle state 218. The response message 230 can include a specific field or identifier to inform the base station 120 of the determination by the UE 110 to transition to the idle state 218. In other cases, the UE 110 purposefully transmits the RRC connection-resume-request message with information not usually found in this type of message, such as incorrect security information, an incorrect radio network temporary identifier (RNTI), or an incorrect resume identity. In response to receiving incorrect information, the base station 120 transmits a second request message 220 instructing the UE 110 to transition to the idle state 218. In this manner, the UE 110 directly or indirectly transitions to the idle state 218 according to the current power status.

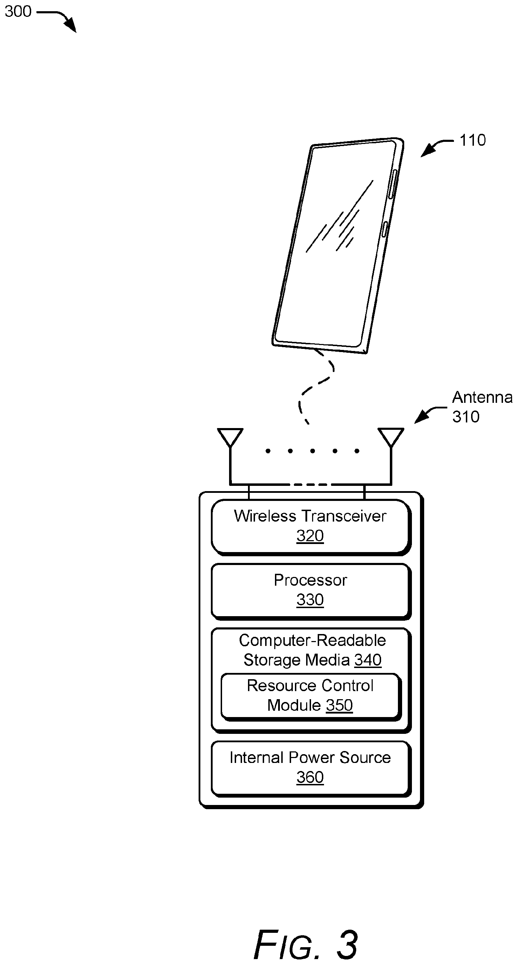

In another situation, the UE 110 receives the request message 220 while in the idle state 218. Instead of directly transitioning to the inactive state 216, the UE 110 evaluates the current power status. If the power status supports the inactive state 216, the UE 110 proceeds with transitioning from the idle state 218 to the inactive state 216. However, if the power status does not support the inactive state 216 (e.g., supports the idle state 218 instead), the UE 110 continues to operate in the idle state 218. In this manner, the UE 110 operates in a resource control state 210 that is appropriate for the current power status. This enables the UE 110 to conserve power in low-power situations or maintain responsiveness in higher-power situations. The UE 110 is further described with respect to FIG. 3.

FIG. 3 illustrates an example UE 110 for determining a resource control state based on a power status. The UE 110 includes at least one antenna 310, at least one wireless transceiver 320, at least one processor 330, and computer-readable storage media (CRM) 340. In some implementations, the antenna 310 is implemented as an array of multiple antennas, as shown in FIG 3.

The wireless transceiver 320 provides connectivity to respective networks and other electronic devices connected therewith. In the context of the example environment 100 or 200, the wireless transceiver 320 enables the UE 110 to communicate with the base station 120 and networks connected therewith. The wireless transceiver 320 includes circuitry and logic for transmitting and receiving communication signals through the antenna 310. Components of the wireless transceiver 320 include amplifiers, switches, mixers, analog-to-digital converters, filters, and so forth for conditioning the communication signals. The wireless transceiver 320 can also include logic to perform inphase/quadrature (I/Q) operations, such as synthesis, encoding, modulation, decoding, demodulation, and so forth. In some cases, components of the wireless transceiver 320 are implemented as separate receiver and transmitter entities. Additionally or alternatively, the wireless transceiver 320 can be realized using multiple or different sections to implement respective receiving and transmitting operations (e.g., separate transmit and receiver chains). In general, the wireless transceiver 320 generates or processes data and/or signals associated with communicating data over the antenna 310 using the wireless link 130, such as receiving the request message 220 or transmitting the response message 230 (of FIG. 2).

The processor 330 can include any type of processor, such as a single core processor or a multiple core processor, that executes processor-executable code stored by the CRM 340. The processor 330, which can be implemented as a modem or an application processor, controls the wireless transceiver 320 and enables wireless communication to be performed. In general, the processor 330 can be implemented within or separate from the wireless transceiver 320 and can include a portion of the CRM 340 or have access to the CRM 340 to obtain computer-readable instructions. Baseband circuitry can also be included within the processor 330 to perform high-rate sampling processes that can include analog-to-digital conversion, digital-to-analog conversion, gain correction, skew correction, frequency translation, and so forth. During reception, the processor 330 processes a baseband version of a signal obtained from the wireless transceiver 320 to generate data, which can be provided to other parts of the UE 110 using a communication interface. The CRM 340 includes any suitable type of data storage media, such as volatile memory (e.g., random access memory (RAM)), non-volatile memory (e.g., Flash memory), optical media, magnetic media (e.g., disk), and so forth. In the context of this disclosure, the CRM 340 is implemented to store instructions, data, and other information of the UE 110, and thus does not include transitory propagating signals or carrier waves.

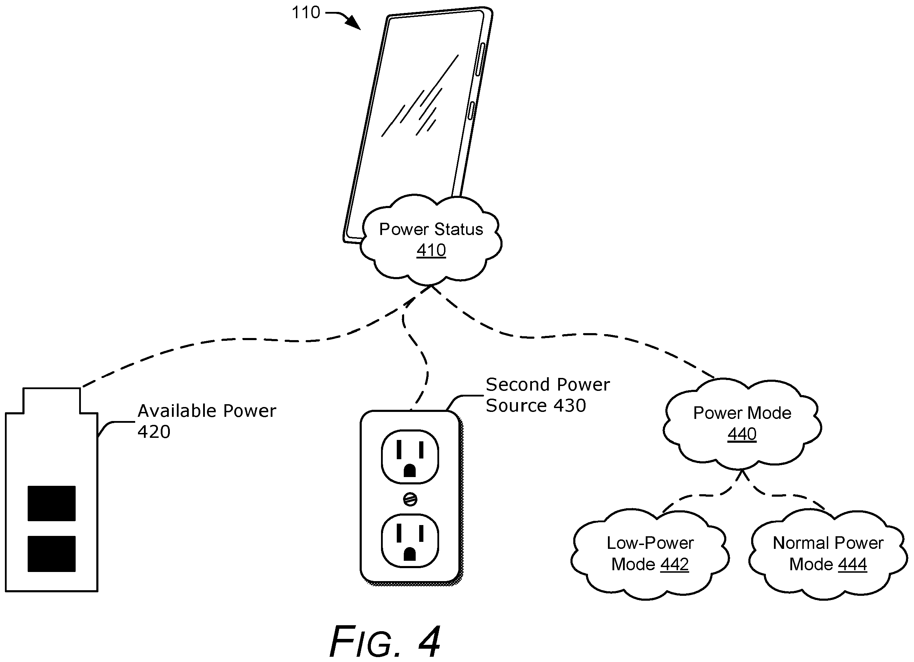

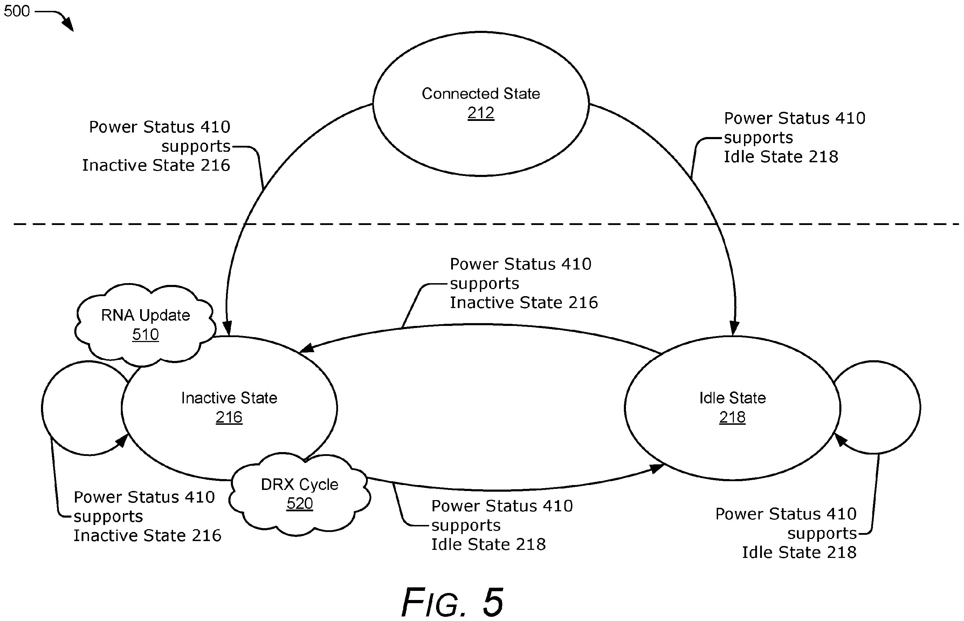

The CRM 340 includes a resource control module 350, which is embodied on the CRM 340 in FIG. 3. Alternately or additionally, the resource control module 350 is implemented in whole or part as hardware logic or circuitry integrated with or separate from other components of the UE 110. The resource control module 350 implements a radio resource control (RRC) layer, as described according to the wireless communication standard. The resource control module 350 determines the resource control state 210 and directs the wireless transceiver 320 to transition between different resource control states 210. The resource control module 350 can at least partially determine the resource control state 210 based on a power status, as further described in FIGs. 4 and 5.

In some implementations, the UE 110 includes an internal power source 360, such as a battery (e.g., battery pack) or a power generator (e.g. a solar power cell). The internal power source 360 supplies power to the wireless transceiver 320 or the processor 330. Typically the power provided by the internal power source 360 is finite. As an example, the power is limited based on a power storage capacity of the internal power source 360 or based on an amount of power the internal power source 360 produces with limited or variable resources (e.g., sunlight or fuel). These restrictions affect a power status of the UE 110 and constrain a duration over which the UE 110 can operate in a mobile configuration. To conserve power resources and facilitate mobile operation, the resource control module 350 determines the power status of the UE 110, as further described with respect to FIG. 4.

FIG. 4 illustrates example characteristics that can be used to identify a power status 410 of the UE 110 for determining the resource control state 210. In some cases, the resource control module 350 determines the power status 410 responsive to receiving the request message 220. Different types of active or passive techniques are employed by the resource control module 350 to determine the power status 410. The resource control module 350, for example, actively requests information from one or more components within the UE 110, such as the internal power source 360, to determine the power status 410. This request can be sent at predetermined time periods that are periodic or nonperiodic, or based on occurrence of an event, such as the processing of the request message 220. In other cases, the resource control module 350 passively receives status messages that relay information about the available power from the UE 110 or the internal power source 360. In different implementations or types of UEs 110, the information obtained by the resource control module 350 can include an available amount of power 420, whether a connection exists to a second power source 430, a power mode 440 of the UE 110, or any combination thereof. Based on this information, the resource control module 350 determines the power status 410.

The available amount of power 420 can refer to an amount of remaining power stored within the internal power source 360 or an amount of unused power that is supplied by the internal power source 360. As an example, the available amount of power 420 may represent a remaining amount of charge of an internal battery. If the available power 420 is below a predetermined power threshold, the resource control module 350 determines that the available power 420 supports no more than the idle state 218 (e.g., does not support the inactive state 216). Alternatively, if the available power 420 is above the predetermined power threshold, the resource control module 350 determines that the available power 420 supports the inactive state 216 as well as any lower-power state.

In some cases, the resource control module 350 determines the power threshold based on a predetermined power threshold that is stored in the CRM 340. As an example, the power threshold can a percentage of charge that is remaining within a battery of the UE 110. In other cases, the resource control module 350 dynamically determines the power threshold based on current characteristics or operations of the UE 110. The power threshold, for example, can be set by the resource control module 350 to enable the UE 110 to operate in the disconnected state 214 for a predetermined amount of time based on a power consumption rate of the UE 110. For example, the power threshold may be dynamically set by the UE 110 to enable the UE 110 to operate in the inactive state 216 for at least a few hours (e.g., two hours or more). In this manner, the resource control module 350 can use prediction techniques to dynamically set the power threshold, which may be based on previously collected data, an existence of or types of interactions currently performed by a user using the UE 110, a current screen brightness, a current audio output, a current time of day, and so forth.

Alternatively or in addition to the available power 420, the resource control module 350 determines the power status 410 of the UE 110 based on information regarding whether the UE 110 is connected to a second power source 430, which may be either internal to or external from the UE 110. If the UE 110 is connected to a second power source 430, or the second power source 430 is charging the internal power source 360, the resource control module 350 determines that the power status 410 supports at least the inactive state 216. Alternatively, the resource control module 350 determines that the power status 410 supports only the idle state 218 if the UE 110 is not connected to a second power source 430.

In some implementations, the UE 110 operate in a particular power mode 440, such as a low-power mode 442 or a normal power mode 444 (e.g., a high-power mode). In the low-power mode 442, the UE 110 consumes less power relative to the normal power mode 444 by, for example, dimming the device screen, limiting processor 330 performance, or turning off vibration feedback. The UE 110 can automatically set the power mode 440 based on the available power 420 or based on a user input. With knowledge of the power status 410, the resource control module 350 directs the wireless transceiver 320 to transition to or remain in an appropriate resource control state 210, as further described with respect to FIG. 5.

FIG. 5 illustrates an example state diagram 500 for determining a resource control state 210 based on a power status 410. A line in the middle of FIG. 5 distinguishes the connected state 212 from the two or more disconnected states 214 (e.g., the inactive state 216 and the idle state 218) that exist according to the wireless communication standard. Although one connected state 212 and two disconnected states 214 are shown in FIG. 5, the techniques for determining a resource control state 210 based on the power status 410 may be applied to other wireless communication standards that have multiple connected states 212 or more than two disconnected states 214 that respectively vary power consumption within the UE 110 by different amounts.

As described above and shown in FIG. 5, the resource control module 350 directs the wireless transceiver 320 to transition from the connected state 212 to one of the disconnected states 214 based on the power status 410. In some cases, this transition may be in response to the UE 110 receiving the request message 220. In some implementations, the resource control module 350 monitors the power status 410 while the wireless transceiver 320 is in one of the disconnected states 214. If the resource control module 350 detects a change in the power status 410, the resource control module 350 determine whether to remain in the current disconnected state 214 or transition to a different disconnected state 214.

Consider that the resource control module 350 directs the UE 110 to transition to the inactive state 216. While in the inactive state 216, the resource control module 350 monitors the power status 410 to detect any changes. If the power status 410 continues to support the inactive state 216, the UE 110 remains in the inactive state 216. However, if the resource control module 350 determines a change in the power status 410, such as the available power 420 going below the power threshold or the UE 110 switching to the low-power mode 442, the resource control module 350 directs the UE 110 to transition from the inactive state 216 to the idle state 218 to conserve power. In some cases, the transition may be automatically triggered by the resource control module 350. In other cases, the resource control module 350 directs the wireless transceiver 320 to transmit a message (e.g., an RRC connection-release message) to the base station 120 using the wireless link 130. This message notifies the base station 120 of the transition to the idle state 218 or request that the base station 120 transmits a second request message 220 that directs the UE 110 to transition to the idle state 218. As such, the resource control module 350 directs the wireless transceiver 320 to transition to the idle state 218, triggers an RRC connection release procedure and directs the wireless transceiver 320 to wait until the second request message 220 is received before entering the idle state 218, or triggers an RRC connection release notification and directs the wireless transceiver 320 to wait to enter the idle state 218 until an acknowledgement is received from the base station 120.

To facilitate transitions between different disconnected states 214 based on a changing power status 410, the resource control module 350 retains information that is unique to a particular disconnected state 214. For example, the resource control module 350 retains UE access stratum (AS) context, security context information, or resource-control-state configurations when entering the idle state 218 from the inactive state 216. Different types of UE access stratum context information include a current RRC configuration, a current security context, a packet data convergence protocol (PDCP) state (e.g., a robust header compression (RoHC) state), a service data adaptation protocol (SDAP) configuration, a cell radio network temporary identifier (C-RNTI) used in the source primary cell (PCell), a *cellldentity,* or a physical cell identity of the source PCell. In this way, the wireless transceiver 320 can transition directly back to the inactive state 216 from the idle state 218 and have the appropriate information available to facilitate operation in the inactive state 216. This information can also enable the UE 110 to readily transition from the inactive state 216 to the connected state 212 to re-establish a connection to the base station 120. In other implementations, the resource control module 350 discards this information to conserve memory resources, which may be advantageous for UEs 110 that have a limited amount of memory available.

Similar to the inactive state 216, the resource control module 350 monitors the power status 410 in the idle state 218. If the power status 410 remains unchanged or continues to support the idle state 218, the resource control module 350 directs the wireless transceiver 320 to remain in the idle state 218. If the power status 410 changes, however, the resource control module 350 directs the wireless transceiver 320 to transition from the idle state 218 to the inactive state 216, which increases a responsiveness of the UE 110. As an example, the power status 410 may change in the idle state 218 if the user connects the UE 110 to a second power source 430. Although not explicitly shown, other situations may cause the resource control module 350 to transition from one of the disconnected states 214 to the connected state 212.

When one of the disconnected states 214 is entered, the resource control module 350 may further modify characteristics or operations of the disconnected state 214 based on the power status 410. In the inactive state 216, for example, the resource control module 350 may control whether a radio-access-network notification-area (RNA) update 510 is performed or control a timing of a discontinuous reception (DRX) cycle 520. Typically the RNA update is performed periodically or responsive to the UE 110 entering a new cell. To further conserve power in the inactive state 216, however, the resource control module 350 may disable the RNA update 510. In some cases, the resource control module 350 directs the wireless transceiver 320 to transmit a message informing the RAN 140 of the decision to not perform the RNA update 510. A determination of whether the RNA update 510 is performed may be made based on another power threshold. If the available power 420, for example, is greater than the second power threshold, the resource control module 350 may enable one or more RNA updates 510 to be performed. If the available power 420 is less than the second power threshold, however, the resource control module 350 may disable one or more RNA updates 510 to conserve power resources.

In some implementations, there may be one or more exceptions that cause the resource control module 350 to enable the RNA update 510, regardless of the power status 410. For example, the resource control module 350 may enable the RNA update 510 if the UE 110 enters a new cell, if the new cell's RNA identity is not the same as a previous RNA identity, or if the new cell's cell identity is not included in a cell list. Information regarding the RNA identity or the cell list may be provided to the resource control module 350 by the base station 120, such as through the request message 220 (e.g., a RRC connection-release message). Another example exception may occur upon expiration of a timer, which is started responsive to the UE 110 entering the inactive state 216.

The DRX cycle 520 controls a duration for which the wireless transceiver 320 operates in a sleep mode (e.g., a time period between performing operations in a wake-up mode). Typically, the inactive state 216 has a shorter DRX cycle 520 compared to the idle state 218, which causes the wireless transceiver 320 to consume a larger amount of power in the inactive state 216 relative to the idle state 218. Depending on the power status 410, however, the resource control module 350 may increase or decrease a period of the DRX cycle 520. As an example, the resource control module 350 may set the period of the DRX cycle 520 to a predetermined value, such as a period of the DRX cycle 520 that is associated with the idle state 218. If the period of the DRX cycle 520 is increased relative to a normal period of the DRX cycle 520 in the inactive state 216, the wireless transceiver 320 operates in the sleep mode for a longer period of time and conserves power. If the resource control module 350 adjusts the DRX cycle 520, the resource control module 350 may cause the wireless transceiver 320 to transmit a status message to inform the RAN 140.

### Example Method

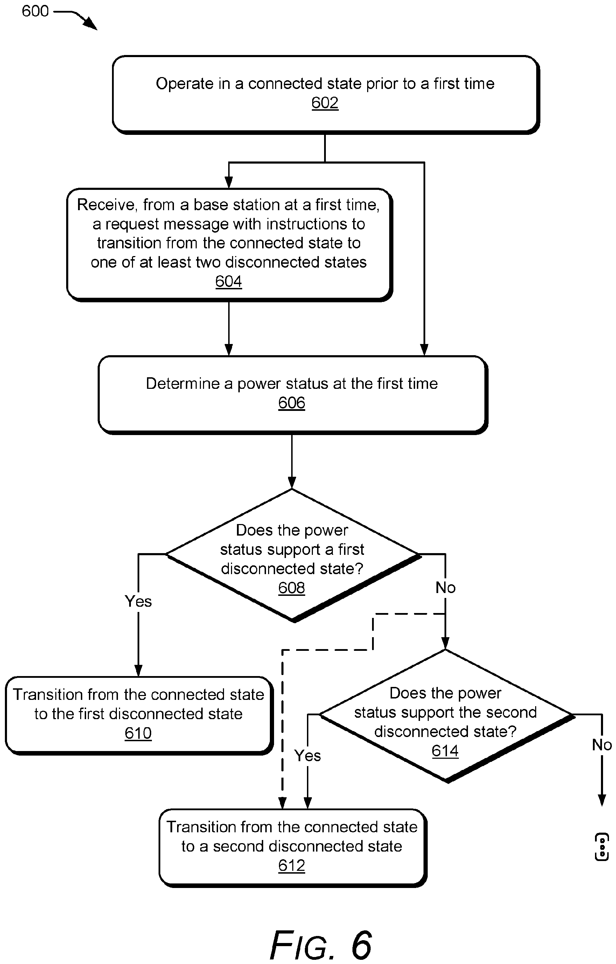

FIG. 6 depicts an example method 600 for determining a resource control state 210 based on a power status 410. Method 600 is shown as a set of operations (or acts) performed but not necessarily limited to the order or combinations in which the operations are illustrated. Further, any of one or more of the operations may be repeated, combined, reorganized, skipped, or linked to provide a wide array of additional and/or alternate methods. In portions of the following discussion, reference may be made to environment 100 of FIG. 1 or 200 of FIG. 2 and entities detailed in FIG. 3, reference to which is made for example only. The techniques are not limited to performance by one entity or multiple entities operating on one device.

At 602, a UE operates in a connected state prior to a first example. For example, the UE 110 operates in the connected state 212 shown in the state diagram of FIG. 5 prior to the first time. In particular, the resource control module 350 of FIG. 3 causes the wireless transceiver 320 to operate in the connected state 212.

Optionally at 604, the UE receives, from a base station at a first time, a request message with instructions to transition from the connected state to one of at least two disconnected states. For example, the UE 110 receives the request message 220 from the base station 120 at the first time. As an example, the request message 220 is an RRC connection-release message. The request message 220 instructs the UE 110 to transition to one of at least two disconnected states 214, such as the inactive state 216 or the idle state 218 shown in FIG. 5.

At 606, the UE determines a power status at the first time. For example, the resource control module 350 of the UE 110 determines the power status 410 at the first time. The power status 410 can be determined based on the available amount of power 420 provided by the internal power source 360, whether or not the UE 110 is connected to the second power source 430, or based on the power mode 440 of the UE 110, as shown in FIG. 4. The resource control module 350 employs active or passive techniques to obtain information for determining the power status 410.

At 608, the UE determines whether or not the power status supports a first disconnected state. The first disconnected state represents the inactive state 216 or a disconnected state that is configured to consume a largest amount of power, for instance. The resource control module 350 makes this determination based on one or more of the following: whether or not the available power 420 provided by the internal power source 360 is greater than a first power threshold, whether or not the UE 110 is connected to the second power source 430, and a current power configuration of the UE 110 (e.g., whether the UE 110 is configured in a normal power mode 444 or a low-power mode 442).

In a first example, the resource control module 350 determines that the power status 410 supports the first disconnected state based on the available power 420 provided by the internal power source 360 being greater than the first power threshold, the UE 110 being connected to the second power source 430, the UE 110 being configured in the normal power mode 444, or any combination thereof. As such, the operations proceed from 608 to 610. The first power threshold can be a predetermined value referenced by the resource control module 350 or dynamically determined by the resource control module 350.

At 610, the UE transitions from the connected state to the first disconnected state responsive to determining that the power status supports the inactive state. For example, the resource control module 350 directs the wireless transceiver 320 to transition from the connected state 212 to the inactive state 216, as shown in FIG. 5.

In a second example, the resource control module 350 determines that the power status 410 does not support the first disconnected state at 608. This determination can be based on the available power 420 provided by the internal power source 360 being less than the first power threshold, the UE 110 not being connected to the second power source 430, the UE 110 being configured in the low-power mode 442, or some combination thereof. Consequently, the operations proceed from 608 to either 612 or 614, depending on the quantity of disconnected states 214. In cases in which there are two disconnected states 214 (e.g., the inactive state 216 and the idle state 218), the operations at 608 proceed to 612 responsive to the power status 410 not supporting the first disconnected state.

At 612, the UE transitions from the connected state to a second disconnected state. The second disconnected state represents the idle state 218 or another disconnected state 214 that is configured to consume less power than the first disconnected state. As an example, the resource control module 350 directs the wireless transceiver 320 to transition from the connected state 212 to the idle state 218, as shown in FIG. 5. In some cases, the resource control module 350 causes the wireless transceiver 320 to transmit a message to the base station 120 to inform the RAN 140 of the determination. This message may be transmitted prior to transitioning to the idle state 218 or while the wireless transceiver 320 is in the idle state 218.

Alternatively, for cases in which there are three or more disconnected states, the operations at 608 proceed to 614 responsive to the power status 410 not supporting the first disconnected state. At 614, the UE determines whether or not the power status supports the second disconnected state (e.g., the idle state 218). The resource control module 350 makes this determination based on one or more of the following: whether or not the available power 420 provided by the internal power source 360 is between the first power threshold and a second power threshold that is lower than the first power threshold, whether or not the UE 110 is connected to the second power source 430, the current power configuration of the UE 110. Similar to the first power threshold, the second power threshold can be a predetermined value referenced by the resource control module 350 or dynamically determined by the resource control module 350.

As an example, the resource control module 350 determines that the power status 410 supports the second disconnected state based on the available power 420 being between the first power threshold and the second power threshold, the UE 110 not being connected to the second power source 430, the UE 110 being configured in the low-power mode 442, or any combination thereof. As such, the operations proceed from 614 to 612.

Alternatively, the resource control module 350 determines that the power status does not support the second disconnected state. In this case, the resource control module 350 can either transition from the connected state to a third disconnected state or perform analogous operations to determine whether or not the power status supports the third disconnected state.

In general, the UE 110 sequentially evaluates each disconnected state in order of decreasing power consumption and increasing response time or delay. In other words, the UE 110 evaluates, in order, a first disconnected state that consumes a highest amount of power and achieves the fastest response time (e.g., shortest delayed response), a second disconnected state that consumes a second highest amount of power and achieves the second fastest response time, a third disconnected state that consumes a third highest amount of power and provides the third fastest response time, and so forth. In this manner, the UE 110 selects a disconnected state 214 from a plurality of disconnected states that consumes an amount of power that is supported by the power status and consumes a larger amount of power relative to other disconnected states that are also supported by the power status 410. This enables the UE 110 to select an appropriate disconnected state 214 that optimizes responsiveness for a given power status 410.

While the wireless transceiver 320 operates in the first disconnected state or the second disconnected state, the resource control module 350 monitors the power status 410. As such, the operations from 606 to 614 can repeat over time while the UE 110 operates in one of the disconnected states 214. Upon detecting a change in the power status 410, the resource control module 350 directs the wireless transceiver 320 to transition to or remain in the appropriate disconnected state 214 based on the power status 410. By determining the resource control state based on the power status 410, the UE 110 balances communication responsiveness and power consumption to support mobile operation.

## Claims

1. A method (600) for a user equipment (110) comprising:
operating (602) in a connected state (212) prior to a first time;
receiving (604), from a base station (120) at the first time, a first request message (220) comprising instructions to transition from the connected state (212) to an inactive state (216);
determining (606) a power status (410) of the user equipment (110) at the first time;
determining (608) whether the power status (410) supports the inactive state (216) at the first time; and
either,
(i) responsive to determining that the power status supports the inactive state (216):
transitioning (610) from the connected state (212) to the inactive state, or
(ii) responsive to determining that the power status (410) does not support the inactive state (216):
transmitting a response message (230) to the base station (120) to cause the base station to transmit a second request message comprising other instructions to transition to an idle state (218); and
responsive to receiving the second request message, transitioning (612) from the connected state (212) to the idle state (218).

2. The method (600) of claim 1, wherein:
the determining (608) of whether the power status (410) supports the inactive state (216) comprises:
comparing a first amount of power (420) that is available to the user equipment (110) to a power threshold; and
either,
(i) responsive to the first amount of power (420) being greater than the power threshold, determining that the power status (410) supports the inactive state (216), or
(ii) responsive to the first amount of power (420) being less than the power threshold, determining that the power status (410) does not support the inactive state (216).

3. The method (600) of claim 2, wherein the power threshold varies based on a rate of power consumption of the user equipment (110).

4. The method (600) of any preceding claim, wherein:
determining that the power status (410) supports the inactive state (216) comprises:
determining that the power status supports the inactive state (216) based on the user equipment (110) being connected to an external power source (430) at the first time.

5. The method (608) of any preceding claim, wherein:
determining (608) whether the power status supports the inactive state (216) comprises either:
(i) determining that the power status supports the inactive state (216) based on a power mode (440) of the user equipment (110) being a normal power mode (444) at the first time; or
(ii) determining that the power status does not support the inactive state (216) based on the power mode (440) of the user equipment being a low-power mode (442) at the first time, the user equipment (110) consuming less power in the low-power mode (442) relative to the normal power mode (444).

6. The method (600) of any preceding claim, further comprising:
responsive to transitioning from the connected state (212) to the inactive state (216), performing at least one of the following:
controlling performance of a radio-access-network notification-area update (510) based on the power status (410); or
adjusting a period of a discontinuous reception cycle (520) based on the power status (410).

7. The method (600) of any preceding claim, further comprising:
responsive to transitioning from the connected state (212) to the inactive state (216):
operating in the inactive state (216) prior to a second time, the second time occurring after the first time;
determining the power status (410) of the user equipment (110) at the second time;
determining that the power status (410) does not support the inactive state (216) at the second time; and
responsive to determining that the power status (410) does not support the inactive state (216), transitioning from the inactive state (216) to the idle state (218).

8. The method (600) of any preceding claim, wherein the response message (230) comprises a radio-resource-control connection-resume-request message.

9. The method (600) of claim 8, wherein:
the radio-resource-control connection-resume-request message comprises information to trigger the base station (120) to transmit the second request message; and
the information includes at least one of the following:
security information;
a radio network temporary identifier; or
a resume identity.

10. The method (600) of any preceding claim, further comprising, responsive to transitioning from the connected state (212) to the idle state (218):
operating in the idle state (218) prior to a second time, the second time occurring after the first time;
determining the power status (410) of the user equipment (110) at the second time;
determining that the power status (410) supports the inactive state (216) at the second time; and
responsive to determining that the power status (410) supports the inactive state (216), transitioning from the idle state (218) to the inactive state (216).

11. The method (600) of any preceding claim, further comprising:
prior to transitioning (612) from the connected state (212) to the idle state (218), storing at least one of the following types of information:
user-equipment access stratum context;
security context information; or
a resource-control-state configuration.

12. A user equipment (110) comprising:
a radio-frequency transceiver (320); and
a processor (330) and memory system configured to perform the method (600) of any of claims 1-11.

## Patentansprüche

1. Verfahren (600) für ein Benutzerendgerät (110), umfassend:
Betreiben (602) in einem verbundenen Zustand (212) vor einem ersten Zeitpunkt;
Empfangen (604) einer ersten Anforderungsnachricht (220) von einer Basisstation (120) zu dem ersten Zeitpunkt, welche Anweisungen umfasst, um von dem verbundenen Zustand (212) in einen inaktiven Zustand (216) überzugehen;
Bestimmen (606) eines Energiestatus (410) des Benutzerendgeräts (110) zu dem ersten Zeitpunkt;
Bestimmen (608), ob der Energiestatus (410) den inaktiven Zustand (216) zu dem ersten Zeitpunkt unterstützt; und entweder
(i) als Antwort auf das Bestimmen, dass der Energiestatus den inaktiven Zustand (216) unterstützt:
Übergehen (610) von dem verbundenen Zustand (212) in den inaktiven Zustand, oder
(ii) als Antwort auf das Bestimmen, dass der Energiestatus (410) den inaktiven Zustand (216) nicht unterstützt:
Übertragen einer Antwortnachricht (230) zu der Basisstation (120), um zu bewirken, dass die Basisstation eine zweite Anforderungsnachricht überträgt, die andere Anweisungen umfasst, um in einen Ruhezustand (218) überzugehen; und
als Antwort auf das Empfangen der zweiten Anforderungsnachricht erfolgendes Übergehen (612) von dem verbundenen Zustand (212) in den Ruhezustand (218).

2. Verfahren (600) nach Anspruch 1, wobei:
das Bestimmen (608), ob der Energiestatus (410) den inaktiven Zustand (216) unterstützt, Folgendes umfasst:
Vergleichen eines ersten Energiebetrags (420), der für das Benutzerendgerät (110) verfügbar ist, mit einem Energieschwellenwert; und entweder
(i) als Antwort darauf, dass der erste Energiebetrag (420) größer als der Energieschwellenwert ist, erfolgendes Bestimmen, dass der Energiestatus (410) den inaktiven Zustand (216) unterstützt, oder
(ii) als Antwort darauf, dass der erste Energiebetrag (420) kleiner als der Energieschwellenwert ist, erfolgendes Bestimmen, dass der Energiestatus (410) den inaktiven Zustand (216) nicht unterstützt.

3. Verfahren (600) nach Anspruch 2, wobei der Energieschwellenwert auf der Grundlage einer Energieverbrauchsrate des Benutzerendgeräts (110) variiert.

4. Verfahren (600) nach einem der vorhergehenden Ansprüche, wobei:
das Bestimmen, dass der Energiestatus (410) den inaktiven Zustand (216) unterstützt, Folgendes umfasst:
darauf beruhend, dass das Benutzerendgerät (110) zu dem ersten Zeitpunkt mit einer externen Energiequelle (430) verbunden ist, erfolgendes Bestimmen, dass der Energiestatus den inaktiven Zustand (216) unterstützt.

5. Verfahren (608) nach einem der vorhergehenden Ansprüche, wobei:
das Bestimmen (608), ob der Energiestatus den inaktiven Zustand (216) unterstützt, eines von Folgenden umfasst:
(i) darauf beruhend, dass ein Energiemodus (440) des Benutzerendgeräts (110) zu dem ersten Zeitpunkt ein normaler Energiemodus (444) ist, erfolgendes Bestimmen, dass der Energiestatus den inaktiven Zustand (216) unterstützt; oder
(ii) darauf beruhend, dass der Energiemodus (440) des Benutzerendgeräts zu dem ersten Zeitpunkt ein Energiesparmodus (442) ist, erfolgendes Bestimmen, dass der Energiestatus den inaktiven Zustand (216) nicht unterstützt, wobei das Benutzerendgerät (110) in dem Energiesparmodus (442) im Vergleich zu dem normalen Energiemodus (444) weniger Energie verbraucht.

6. Verfahren (600) nach einem der vorhergehenden Ansprüche, ferner Folgendes umfassend:
als Antwort auf das Übergehen von dem verbundenen Zustand (212) in den inaktiven Zustand (216) erfolgendes Durchführen von mindestens einem der Folgenden:
auf dem Energiestatus (410) beruhendes Steuern der Durchführung einer Funkzugangsnetz-Benachrichtigungsbereichsaktualisierung (510); oder
auf dem Energiestatus (410) beruhendes Einstellen einer Periode eines diskontinuierlichen Empfangszyklus (520).

7. Verfahren (600) nach einem der vorhergehenden Ansprüche, ferner Folgendes umfassend:
als Antwort auf das Übergehen von dem verbundenen Zustand (212) in den inaktiven Zustand (216):
Betreiben in dem inaktiven Zustand (216) vor einem zweiten Zeitpunkt, wobei der zweite Zeitpunkt nach dem ersten Zeitpunkt eintritt;
Bestimmen des Energiestatus (410) des Benutzerendgeräts (110) zu dem zweiten Zeitpunkt;
Bestimmen, dass der Energiestatus (410) den inaktiven Zustand (216) zu dem zweiten Zeitpunkt nicht unterstützt; und
als Antwort auf das Bestimmen, dass der Energiestatus (410) den inaktiven Zustand (216) nicht unterstützt, Übergehen von dem inaktiven Zustand (216) in den Ruhezustand (218).

8. Verfahren (600) nach einem der vorhergehenden Ansprüche, wobei die Antwortnachricht (230) eine Verbindungswiederaufnahme-Aufforderungsnachricht der Funkressourcensteuerung umfasst.

9. Verfahren (600) nach Anspruch 8, wobei:
die Verbindungswiederaufnahme-Aufforderungsnachricht der Funkressourcensteuerung Informationen umfasst, um die Basisstation (120) zu veranlassen, die zweiten Anforderungsnachricht zu übertragen; und
die Informationen mindestens eines von Folgendem einschließen:
Sicherheitsinformationen;
eine temporäre Funknetzkennung; oder
eine Wiederaufnahme-Identität.

10. Verfahren (600) nach einem der vorhergehenden Ansprüche, ferner als Antwort auf das Übergehen vom verbundenen Zustand (212) in den Ruhezustand (218) Folgendes umfassend:
Betreiben im Ruhezustand (218) vor einem zweiten Zeitpunkt, wobei der zweite Zeitpunkt nach dem ersten Zeitpunkt liegt;
Bestimmen des Energiestatus (410) des Benutzerendgeräts (110) zu dem zweiten Zeitpunkt;
Bestimmen, dass der Energiestatus (410) den inaktiven Zustand (216) zu dem zweiten Zeitpunkt unterstützt; und
als Antwort auf das Bestimmen, dass der Energiestatus (410) den inaktiven Zustand (216) unterstützt, Übergehen vom Ruhezustand (218) in den inaktiven Zustand (216).

11. Verfahren (600) nach einem der vorhergehenden Ansprüche, ferner Folgendes umfassend:
vor dem Übergehen (612) von dem verbundenen Zustand (212) in den inaktiven Zustand (218) erfolgendes Speichern von mindestens einer der folgenden Arten von Informationen:
Access-Stratum-Kontext des Benutzerendgeräts;
Sicherheitskontextinformation; oder
eine Ressourcensteuerungszustand-Konfiguration.

12. Benutzerendgerät (110), Folgendes umfassend:
einen Funkfrequenz-Sendeempfänger (320); und
einen Prozessor (330) und ein Speichersystem, die dafür konfiguriert sind, das Verfahren (600) nach einem der Ansprüche 1 bis 11 durchzuführen.

## Revendications

1. Procédé (600) pour un équipement d'utilisateur (110) comprenant :
le fonctionnement (602) dans un état connecté (212) avant un premier instant ;
la réception (604), à partir d'une station de base (120) au moment du premier instant, d'un premier message de requête (220) comprenant des instructions pour faire la transition de l'état connecté (212) à un état inactif (216) ;
la détermination (606) d'un état de puissance (410) de l'équipement d'utilisateur (110) au moment du premier instant ;
la détermination (608) du fait que l'état de puissance (410) prend en charge l'état inactif (216) au moment du premier instant ; et soit,
(i) en réponse à la détermination que l'état de puissance prend en charge l'état inactif (216) :
le passage (610) de l'état connecté (212) à l'état inactif, ou
(ii) en réponse à la détermination que l'état de puissance (410) ne prend pas en charge l'état inactif (216) :
la transmission d'un message de réponse (230) à la station de base (120) pour amener la station de base à transmettre un deuxième message de requête comprenant d'autres instructions pour passer à un état de veille (218) ; et
en réponse à la réception du deuxième message de requête, le passage (612) de l'état connecté (212) à l'état de veille (218).

2. Procédé (600) selon la revendication 1, dans lequel :
la détermination (608) du fait que l'état de puissance (410) prend en charge l'état inactif (216) comprend :
la comparaison d'une première quantité de puissance (420) qui est disponible à l'équipement d'utilisateur (110) à un seuil de puissance ; et soit,
(i) en réponse à la première quantité de puissance (420) étant supérieure au seuil de puissance, la détermination que l'état de puissance (410) prend en charge l'état inactif (216), ou
(ii) en réponse à la première quantité de puissance (420) étant inférieure au seuil de puissance, la détermination que l'état de puissance (410) ne prend pas en charge l'état inactif (216).

3. Procédé (600) selon la revendication 2, dans lequel le seuil de puissance varie sur la base d'un taux de consommation de puissance de l'équipement d'utilisateur (110).

4. Procédé (600) selon l'une quelconque des revendications précédentes, dans lequel :
la détermination que l'état de puissance (410) prend en charge l'état inactif (216) comprend :
la détermination que l'état de puissance prend en charge l'état inactif (216) sur la base de l'équipement d'utilisateur (110) étant connecté à une source de puissance externe (430) au moment du premier instant.

5. Procédé (608) selon l'une quelconque des revendications précédentes, dans lequel :
la détermination (608) du fait que l'état de puissance prend en charge l'état inactif (216) comprend soit :
(i) la détermination que l'état de puissance prend en charge l'état inactif (216) sur la base qu'un mode de puissance (440) de l'équipement d'utilisateur (110) se trouve dans un mode de puissance normal (444) au moment du premier instant ; ou
(ii) la détermination que l'état de puissance ne prend pas en charge l'état inactif (216) sur la base que le mode de puissance (440) de l'équipement d'utilisateur se trouve dans un mode faible puissance (442) au moment du premier instant, l'équipement d'utilisateur (110) consommant moins de puissance dans le mode faible puissance (442) par rapport au mode de puissance normal (444).

6. Procédé (600) selon l'une quelconque des revendications précédentes, comprenant en outre :
en réponse au passage de l'état connecté (212) à l'état inactif (216), la réalisation d'au moins l'un parmi les suivants :
la commande de la réalisation d'une mise à jour de la zone de notification d'un réseau d'accès par radio (510) sur la base de l'état de puissance (410) ; ou
l'ajustement d'une période d'un cycle de réception discontinu (520) sur la base de l'état de puissance (410).

7. Procédé (600) selon l'une quelconque des revendications précédentes, comprenant en outre :
en réponse au passage de l'état connecté (212) à l'état inactif (216) :
le fonctionnement dans l'état inactif (216) avant un deuxième instant, le deuxième instant se produisant après le premier instant ;
la détermination de l'état de puissance (410) de l'équipement d'utilisateur (110) au moment du deuxième instant ;
la détermination que l'état de puissance (410) ne prend pas en charge l'état inactif (216) au moment du deuxième instant ; et
en réponse à la détermination que l'état de puissance (410) ne prend pas en charge l'état inactif (216), le passage de l'état inactif (216) à l'état de veille (218).

8. Procédé (600) selon l'une quelconque des revendications précédentes, dans lequel le message de réponse (230) comprend un message de demande de reprise de connexion de contrôle des ressources radio.

9. Procédé (600) selon la revendication 8, dans lequel :
le message de demande de reprise de connexion de contrôle des ressources radio comprend des informations pour déclencher la transmission du deuxième message de requête par la station de base (120) ; et
les informations incluent au moins l'un parmi les suivants :
des informations de sécurité ;
un identifiant temporaire de réseau radio ; ou
une identité de reprise.

10. Procédé (600) selon l'une quelconque des revendications précédentes, comprenant en outre, en réponse au passage de l'état connecté (212) à l'état de veille (218) :
le fonctionnement dans l'état de veille (218) avant un deuxième instant, le deuxième instant se produisant après le premier instant ;
la détermination de l'état de puissance (410) de l'équipement d'utilisateur (110) au moment du deuxième instant ;
la détermination que l'état de puissance (410) prend en charge l'état inactif (216) au moment du deuxième instant ; et
en réponse à la détermination que l'état de puissance (410) prend en charge l'état inactif (216), le passage de l'état de veille (218) à l'état inactif (216).

11. Procédé (600) selon l'une quelconque des revendications précédentes, comprenant en outre :
avant le passage (612) de l'état connecté (212) à l'état de veille (218), le stockage d'au moins l'un parmi les types d'informations suivants :
un contexte de la strate d'accès de l'équipement d'utilisateur ;
des informations de contexte de sécurité ; ou
une configuration de l'état de contrôle des ressources.

12. Équipement d'utilisateur (110) comprenant :
un émetteur-récepteur de radiofréquence (320) ; et
un processeur (330) et un système de mémoire configuré pour réaliser le procédé (600) selon l'une quelconque des revendications 1 à 11.
